# EUROPÄISCHE PATENTANMELDUNG

(11) **EP 2 422 602 A1**
(43) Veröffentlichungstag der Anmeldung: **29.02.2012**
(21) Anmeldenummer: 11179450.9
(22) Anmeldetag: 31.08.2011
(51) Int. Cl.: A01D 34/74

(54) **Gartengerät**

(30) Priorität: 31.08.2010 DE 202010008414 U
(71) Anmelder: AL-KO Kober AG, 89359 Kötz (DE)
(72) Erfinder: Buchmiller, Wolfgang, 89312 Günzburg (DE); Eberle, Michael, 89362 offingen (DE); De Filippo, Antonio, 73342 Bad Ditzenbach (DE)
(74) Vertreter: Ernicke, Klaus Stefan

(57) **Zusammenfassung**

Die Erfindung betrifft ein Gartengerät (1), insbesondere einen Rasenmäher, der ein Chassis (2), ein Fahrwerk (36) sowie ein Schneidwerkzeug (4) mit einem Schneidantrieb (8) und einer Schnitthöhenverstellung (13) aufweist, welche die Höhe des Schneidwerkzeugs (4) und seines Schneidantriebs (8) relativ zum Chassis (2) verstellt. Die Schnitthöhenverstellung (13) weist eine manuelle oder motorische Stelleinrichtung (14,15) und eine Momentenstütze (10) für den Schneidantrieb (8) auf.

## Beschreibung

Die Erfindung betrifft ein Gartengerät, insbesondere einen Rasenmäher.

Es sind Rasenmäher bekannt, die ein Chassis, ein Fahrwerk und ein Schneidwerkzeug mit einem Antrieb sowie einer Schnitthöhenverstellung mit einer Stellschraube besitzen. Damit kann die Höhe des Schneidwerkzeugs und seines Antriebs relativ zum Chassis verstellt werden.

Aus der Praxis sind Rasenmäher mit einem motorisch angetriebenen Schneidwerkzeug bekannt, die von Hand geschoben werden und bei denen die Schnitthöhe am Fahrwerk durch Heben oder Senken des Chassis gegenüber den Radachsen manuell verstellt wird. Die DE 10 2005 045 239 A1 zeigt hierzu eine weiterentwickelte Konstruktion mit einer Parallelogramm-Lenkeranordnung.

Ferner kennt man autonome Rasenmäher mit einer Selbstlenkeinrichtung, die eigenständig über die Rasenfläche navigieren und hierbei durch Randbegrenzung, z.B. elektrische Bodenkabel, oder durch ein Navigationssystem mit GPS, Funkortung, Infrarot oder dgl. navigiert werden. Solche Mähroboter haben ebenfalls eine Schnitthöhenverstellung, mit der das Chassis mit allen Anbauteilen einschließlich des aus Antrieb und Schneidwerkzeug bestehenden Mähwerks gehoben und gesenkt wird.

Es ist Aufgabe der vorliegenden Erfindung, ein verbessertes Gartengerät mit einer Schnitthöhenverstellung aufzuzeigen.

Die Erfindung löst diese Aufgabe mit den Merkmalen im Hauptanspruch.

Mit der Erfindung wird vorgeschlagen, zur Schnitthöhenverstellung das Schneidwerkzeug mitsamt seinem Antrieb relativ zum Gerätechassis zu verstellen. Hierfür ist es günstig, das Antriebsgewicht niedrig zu halten und z.B. einen hochdrehenden Elektromotor einzusetzen. Günstig ist hierbei auch der Einsatz bei einem Geräteroboter, insbesondere autonomen Mähroboter. Günstig ist auch die Geräteausbildung als Mulchmäher, der nur relativ wenig Grashöhe wegschneidet und die Partikel auf dem Rasen liegen lässt. Ein autonomer Mähroboter kann entsprechend öfter fahren.

Für die Schnitthöhenverstellung ist eine manuelle oder motorische Stelleinrichtung vorgesehen, die für eine Hebeund Senkbewegung in Richtung der vorzugsweise vorhandenen aufrechten Drehachse des Schneidwerkzeugs sorgt.

Die konstruktive Ausbildung einer solchen Stelleinrichtung kann unterschiedlich sein. Ferner ist eine Momentenstütze für die Reaktionsmomente des Schneidantriebs vorgesehen, welche die Stelleinrichtung von Krafteinflüssen entlastet und die eingestellte Schnitthöhe konstant hält. Die Schnitthöhenverstellung kann bevorzugt in Stufen oder stufenlos erfolgen.

Die beanspruchte manuelle Stelleinrichtung hat den Vorteil einer leichten und einfachen Bedienbarkeit und ist außerdem selbsterklärend. Zur Schnitthöhenverstellung genügt eine Dreh- und Hebebewegung, die mit einer Hand ausgeführt werden kann. Hierbei kann auch eine Arretierung durch die Drehbewegung geöffnet und geschlossen werden. Die Stelleinrichtung hat Vorteile hinsichtlich eines geringen Bau- und Kostenaufwands, einer einfachen und betriebssicheren Gestaltung sowie einer verbesserten Ergonomie.

Die beanspruchte motorische Stelleinrichtung ermöglicht eine stufenlose Schnitthöhenverstellung. Dies kann mittels einer Drehbewegung eines Kulissenteils erfolgen, wobei Rückstellkräfte vom Schneidantrieb durch die Momentenstütze vermieden werden. Auch der Bau- und Kostenaufwand kann klein gehalten werden.

Die verschiedenen Varianten der Stelleinrichtung haben ferner den Vorteil eines geringen Platzbedarfs und eines niedrigen Gewichts. Sie können bei beliebigen Arten von Gartengeräten mit Schneidwerkzeugen eingesetzt werden. Vorteile bestehen insbesondere bei manuell geführten oder autonomen Rasenmähern. Speziell bei Mährobotern ist es aus Energiegründen vorteilhaft, das Gewicht und den Energieverbrauch niedrig zu halten, um größere Bodenflächen in einem Zug bearbeiten zu können. Das beanspruchte Gartengerät ist vorzugsweise als autonomer Mähroboter, insbesondere als Mulchmäher, ausgebildet, bei dem die Vorteile der Schnitthöhenverstellung besonders stark zum Tragen kommen.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: einen autonomen Rasenmäher in perspektivischer Gesamtansicht mit integrierter Schnitthöheneinstellung und mit einem geschlossenen Chassis oder Gehäuse,
- Figur 2:: eine aufgebrochene Seitenansicht des Rasenmähers von Figur 1,
- Figur 3:: eine perspektivische Frontansicht des Rasenmähers von Figur 1 mit geöffnetem Gehäuse und mit einer oberen Schnitthöheneinstellung,
- Figur 4:: eine andere perspektivische Ansicht des Rasenmähers von Figur 1 mit unterer Schnitthöheneinstellung,
- Figur 5:: eine perspektivische Draufsicht des Rasenmähers von Figur 1 mit einer manuellen Stelleinrichtung und einer offen gelegten Rasteinrichtung,
- Figur 6:: eine Draufsicht auf den Rasenmäher mit manueller Stelleinrichtung,
- Figur 7:: einen Längsschnitt durch den Rasenmäher gemäß Schnittlinie VII-VII von Figur 6,
- Figur 8:: eine vergrößerte und längsgeschnittene Detailansicht einer manuellen Stelleinrichtung,
- Figur 9:: eine perspektivische Draufsicht auf einen Rasenmäher mit einer motorischen Stelleinrichtung bei geöffnetem Gehäuse,

- Figur 10:: eine perspektivische Ansicht der motorischen Stelleinrichtung von Figur 9 in unterer Schnitthöheneinstellung,
- Figur 11:: eine abgebrochene Seitenansicht der motorischen Stelleinrichtung von Figur 10 und
- Figur 12:: eine perspektivische Ansicht der motorischen Stelleinrichtung von Figur 10 und 11 in einer oberen Schnitthöheneinstellung.

Die Erfindung betrifft ein Gartengerät (1), welches vorzugsweise als fahrbarer Rasenmäher ausgebildet ist. Das Gartengerät (1) kann manuell bedient und bewegt, insbesondere geschoben werden. Es kann alternativ ein autonomer Mähroboter sein.

Das Gartengerät (1) weist ein Chassis (2) und Fahrwerk (36) auf. Zudem kann ein Fahrantrieb (37) vorhanden sein, wobei das Gartengerät (1) ein oder mehrere, z.B. zwei angetriebene Räder (38) und ein oder mehrere weitere frei drehbare Räder (39) aufweist. Diese können schwenkbar gelagert sein und z.B. die in den Ausführungsbeispielen gezeigte aufrechte oder vertikale Schwenkachse haben. Das gezeigte Gartengerät (1) hat vier Räder.

Das Gartengerät (1) besitzt ein Schneidwerkzeug (4) mit einem Antrieb (8), der nachfolgend als Schneidantrieb bezeichnet wird. Das Schneidwerkzeug (4) kann in beliebiger Weise ausgebildet sein und ein oder mehrere Teile aufweisen. In den gezeigten Ausführungsbeispielen ist es als rotierender Messerbalken (5) ausgeführt, der um eine Drehachse (6) rotiert. Die Drehachse (6) ist z.B. aufrecht oder vertikal ausgerichtet, wobei der Messerbalken (5) sich im wesentlichen horizontal erstreckt. In einer anderen nicht dargestellten Ausführungsform kann das Schneidwerkzeug (4) als Schneidwalze mit einer horizontalen Drehachse ausgeführt sein. Daneben gibt es beliebige andere konstruktive Abwandlungen mit rotierendem Faden, Kreiselmesser oder dgl. Das Schneidwerkzeug (4) kann auch mehrfach vorhanden sein.

Das Gartengerät (1) weist eine Schnitthöhenverstellung (13) auf, mit der die Wirkhöhe oder Schneidhöhe des Schneidwerkzeugs (4) gegenüber dem Untergrund, insbesondere einer Rasenfläche, verstellt werden kann. Die Höhenverstellung kann in Stufen oder stufenlos erfolgen.

Die Schnitthöhenverstellung (13) ist derart ausgebildet, dass die Höhe des Schneidwerkzeugs (4) relativ zum Chassis (2) verstellt wird. Hierbei wird das Schneidwerkzeug (4) gegenüber dem Chassis (2) gehoben oder gesenkt. Das Schneidwerkzeug (4) kann in der Höhe unabhängig vom Schneidantrieb (8) verstellt werden, wobei eine längenveränderliche und z.B. teleskopierbare Antriebsverbindung besteht. In den gezeigten Ausführungsbeispielen ist die Schnitthöhenverstellung (13) derart ausgebildet, dass sie das Schneidwerkzeug (4) und seinen Schneidantrieb (8) gemeinsam in der Höhe relativ zum Chassis (2) verstellt. Bei dem gezeigten rotierenden Schneidwerkzeug (4) erfolgt die Höhenverstellung in Richtung der Drehachse (6). Bei anderen Varianten kann die Verstellung in anderer Richtung, insbesondere quer dazu erfolgen.

Bei den gezeigten Schnitthöhenverstellungen (13) ist die Verstellbewegung geradlinig und längs der besagten Drehachse (6) ausgeführt. In Variation hierzu kann die Schnitthöhe auch mit einer Schwenkbewegung oder einer anderen Bewegungskinematik verstellt werden.

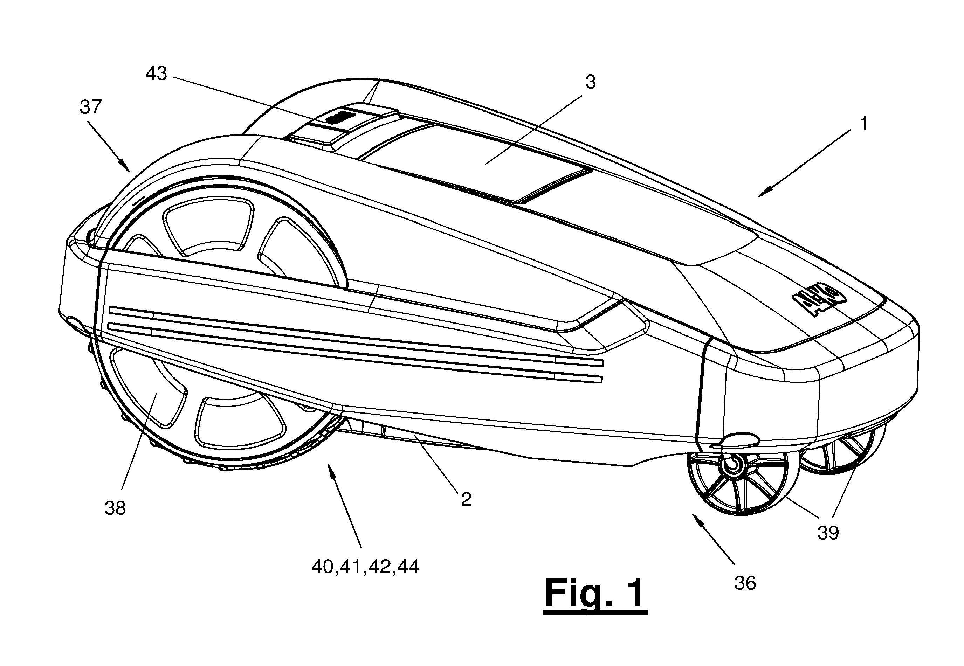

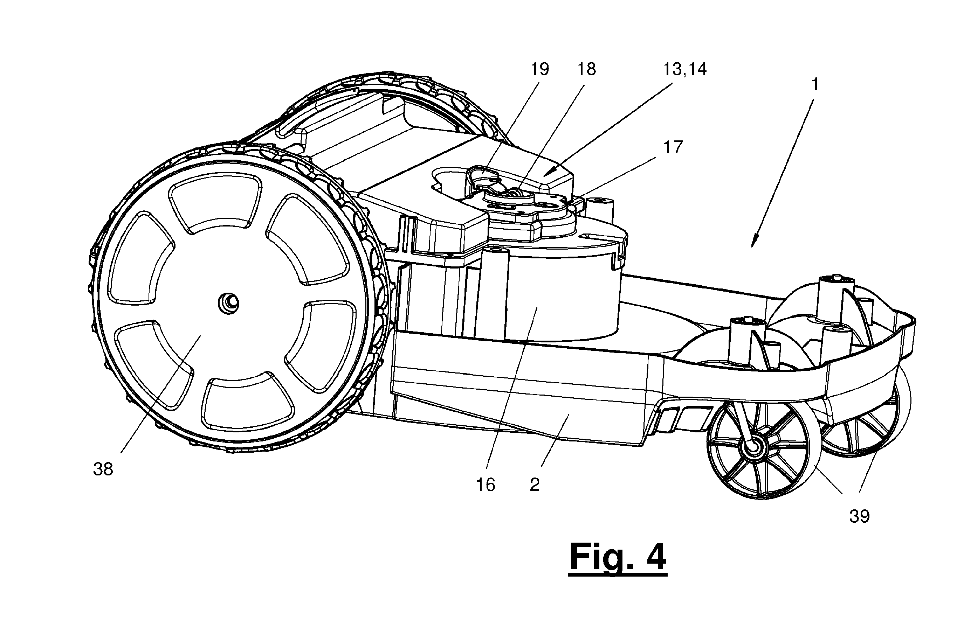

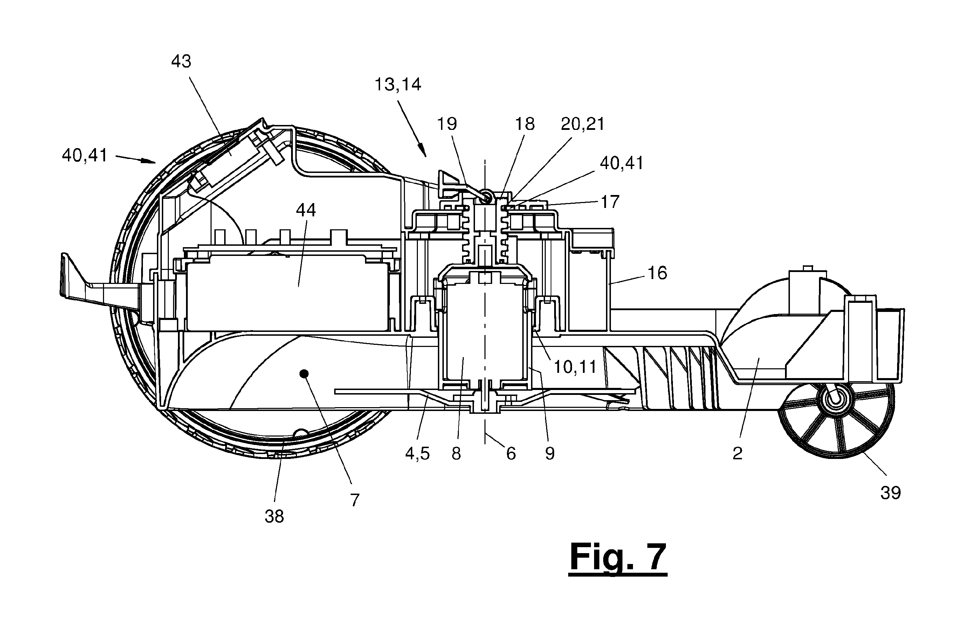

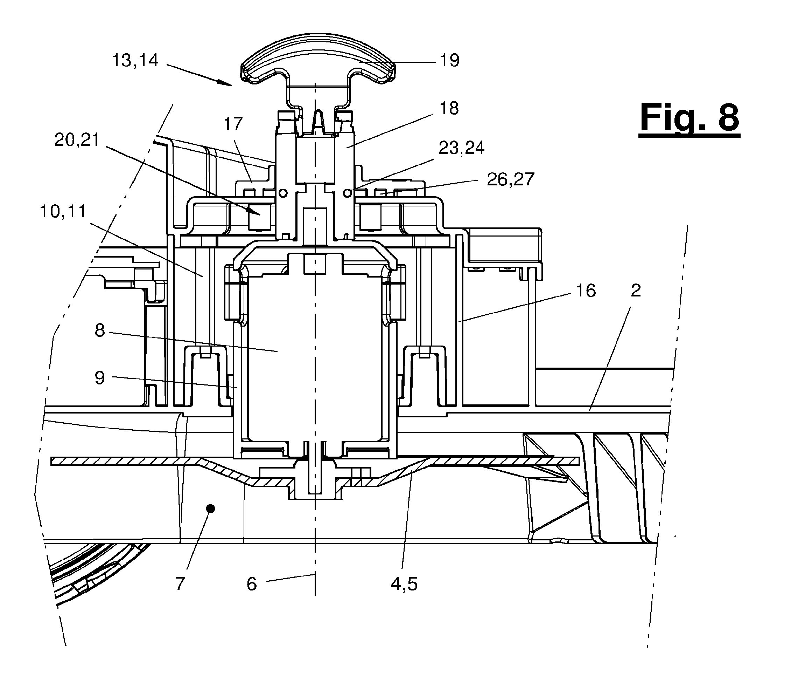

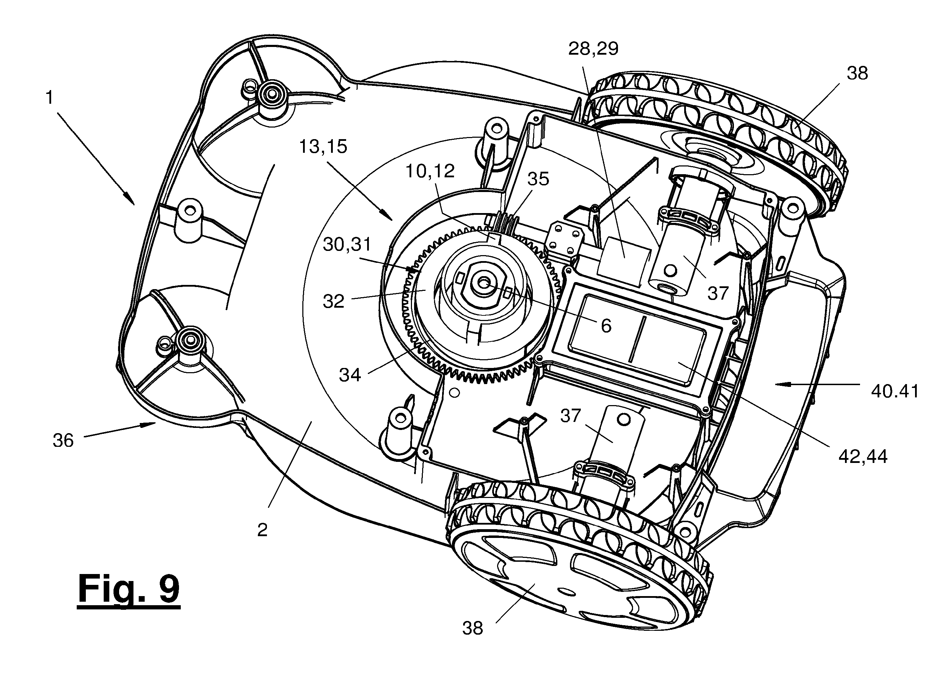

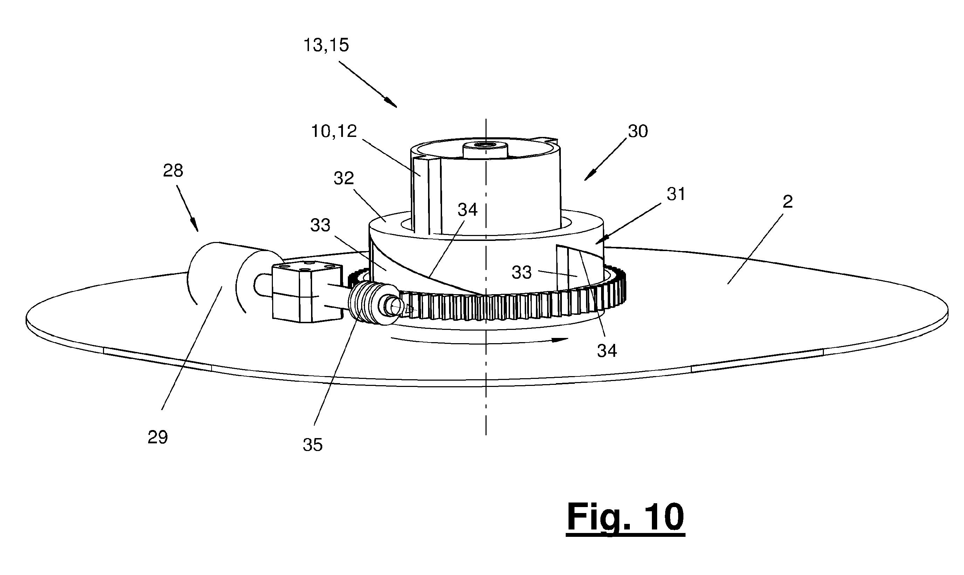

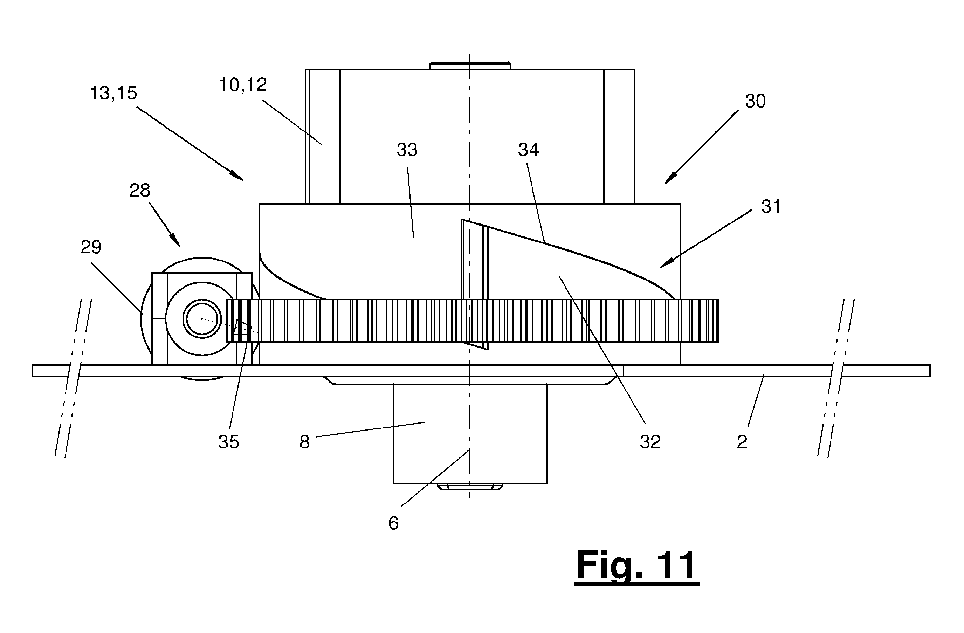

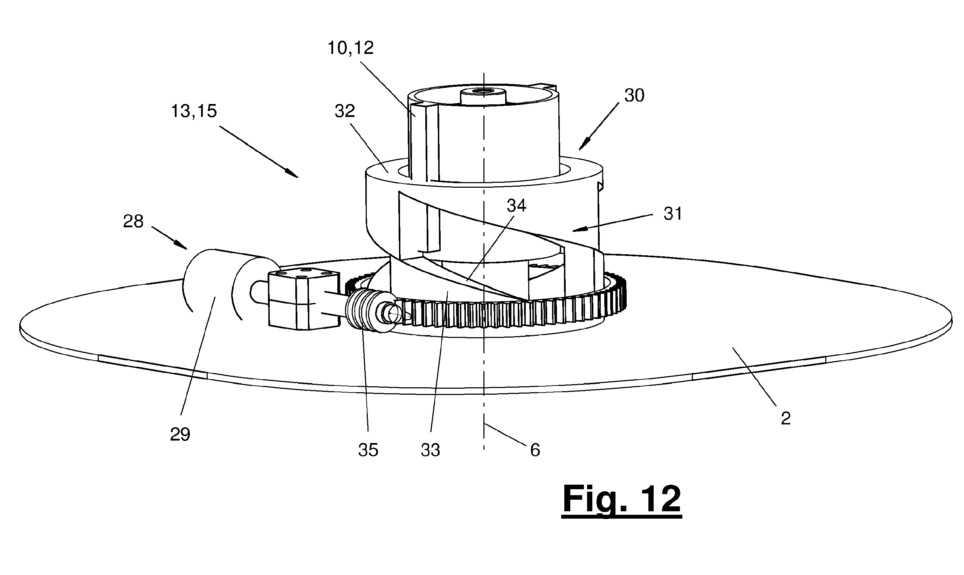

Die Schnitthöhenverstellung (13) weist eine manuelle Stelleinrichtung (14) auf, die beispielhaft in Figur 1 bis 8 dargestellt ist. Die Schnitthöhenverstellung (13) kann alternativ eine motorische Stelleinrichtung (15) haben, die in Figur 9 bis 12 beispielhaft dargestellt ist. Diese weist einen Stellantrieb (28) auf, der beliebig ausgebildet sein kann und der z.B. einen Motor (29), insbesondere einen Elektromotor, speziell einen Gleichstrommotor mit Niederspannung, aufweist. Der Stellantrieb (28) kann alternativ statt eines Motors (29) beliebige andere Antriebsmittel, z.B. einen Zylinder, einen elektromagnetischen Linearantrieb oder dgl. aufweisen. Der Begriff der motorischen Stelleinrichtung (15) deckt diese beliebig ausgestalteten Antriebsmittel ab.

In den verschiedenen Ausführungsbeispielen hat die Stellenrichtung (14,15) ein Stellmittel (18,30), mit dem das Schneidwerkzeug (4) allein oder zusammen mit dem Schneidantrieb (8) in der Höhe relativ zum Chassis (2) verstellt wird. Die Stelleinrichtung (14,15) weist ferner eine Arretierung (20) auf, in der die gewünschte Schnitthöhe fixiert werden kann. Das Stellmittel (18,30) und die Arretierung (20) können außer in den gezeigten und nachstehend erläuterten Ausführungsbeispielen auch in beliebiger anderer Weise ausgestaltet sein.

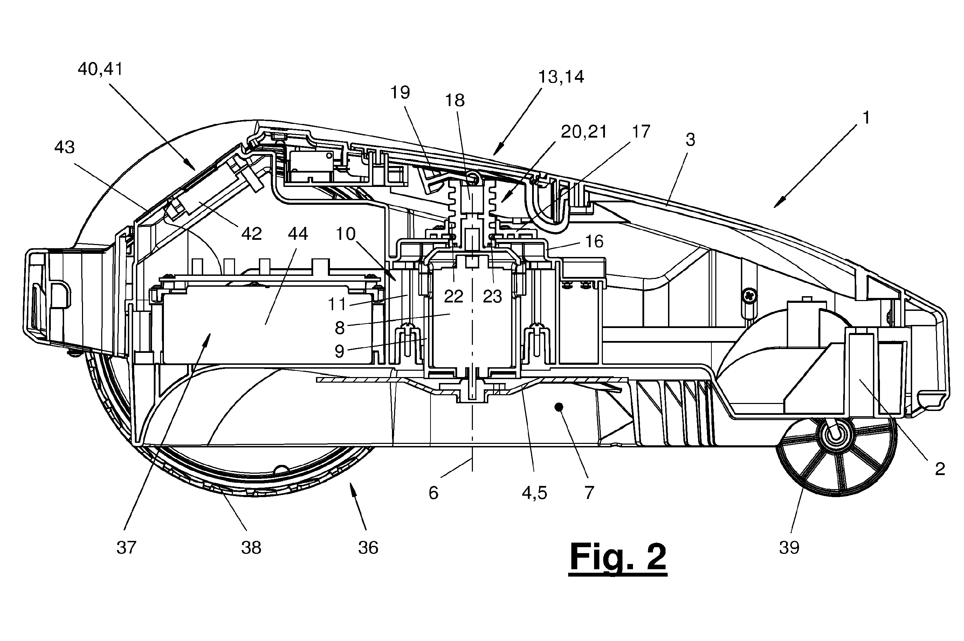

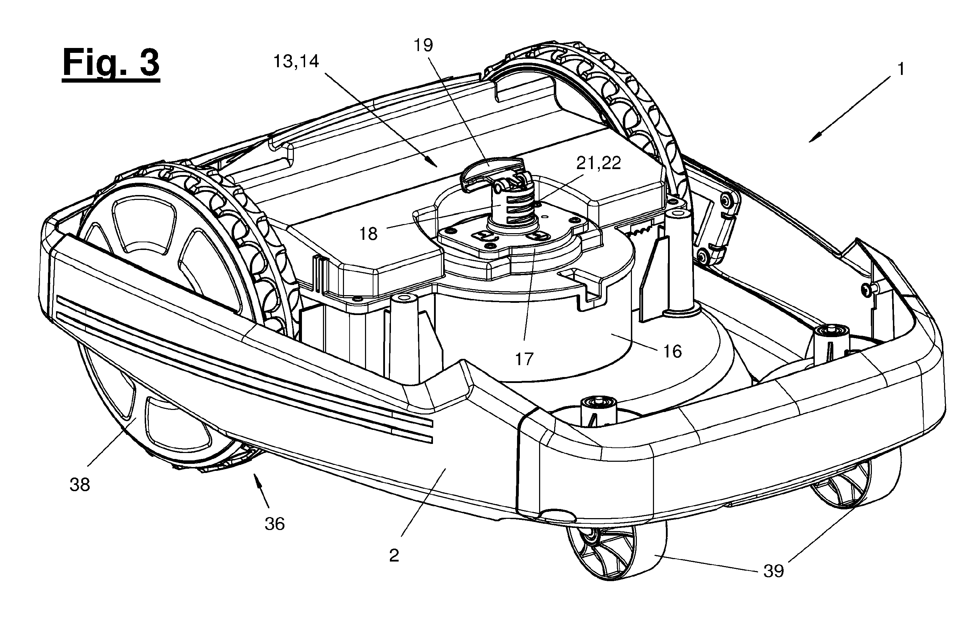

In den gezeigten Ausführungsbeispielen ist das Chassis (2) als Gehäuse ausgebildet, welches die verschiedenen Gerätekomponenten umgibt und einhaust. Es kann sich hierbei um ein integrales Gehäuse aus Kunststoff oder um ein mehrteiliges Gehäuse mit einer Bodengruppe handeln, welche die Chassisfunktion erfüllt. Das Chassis oder Gehäuse (2) kann eine z.B. oben liegende Zugangsöffnung zu den innenliegenden Gerätekomponenten aufweisen, die mit einem lösbaren Deckel, z.B. einer Haube, verschließbar ist. Figur 1 und 2 zeigen das geschlossene Gehäuse. In Figur 3 und folgenden ist das Gehäuse oder Chassis (2) offen und der Deckel (3) abgenommen.

Das Gartengerät (1), insbesondere in der gezeigten Ausbildung als Rasenmäher, kann sich eigenständig bewegen und ist als autonomer Mähroboter ausgebildet. Es weist eine Lenkeinrichtung (41) auf, die in beliebig geeigneter Weise ausgebildet sein kann. Im gezeigten Ausführungsbeispiel hat jedes Rad (38) einen eigenen Fahrantrieb (37), wobei die Fahrantriebe (37) getrennt voneinander in Richtung und Geschwindigkeit gesteuert werden können, sodass über unterschiedliche Rotationen der angetriebenen Räder (38) die Fahrtrichtung geändert wird. Der gezeigte Mähroboter (1) hat ferner eine Autonomieeinrichtung (40), die als Selbstlenkeinrichtung ausgebildet ist und mit der der Mähroboter (1) autonom seinen Weg sucht oder eine vorgegebene Bahn verfolgt, um die Rasenfläche vollständig und wirtschaftlich zu mähen. Hierfür können beliebige Techniken zum Einsatz kommen, z.B. eine Flächenranderkennung mittels eines mit einem elektrischen Signal beaufschlagten Bodendrahts, ein Navigationssystem mit Orientierungssignal, insbesondere Satellitensignal, z.B. GPS, und/oder mit Kartenmaterial und Selbstlernfunktion, eine navigierende und vorzugsweise drahtlos kommunizierende Fernsteuerung per Funk, Infrarot oder dgl. Ferner kann der Mähroboter (1) eine Basisstation mit einer Ladeeinrichtung (nicht dargestellt) haben.

Bei der gezeigten Ausführungsform weist der Schneidantrieb (8) einen Elektromotor auf, der von einer vorzugsweise elektrischen Energieversorgung (44) gespeist wird. Auch die Fahrantriebe (37) und der ggf. vorhandene Stellantrieb (29) können Elektromotoren aufweisen. Alternativ sind beliebige andere Antriebs- und Energieversorgungstechniken möglich. Die Energieversorgung (44) weist z.B. eine wiederaufladbare elektrische Batterie oder einen Akkumulator auf. Ferner besitzt der Mähroboter (1) eine integrierte Steuerung (42) und eine von außen erreichbare Bedieneinrichtung (43), die z.B. Tasten und Anzeigen für verschiedene Gerätefunktionen an der Gehäuseaußenseite aufweist. Alternativ oder zusätzlich ist eine Fernbedienung möglich, die z.B. drahtlos mit der Steuerung (42) kommuniziert und ein mobiles Sende- und Empfangsteil aufweist. Je nach Art der Autonomieeinrichtung (40) sind verschiedene Navigationsmittel, z.B. Sensoren zur Erkennung von Bodenkabeln, Kollisionssituationen mit Hindernissen etc. vorhanden und ggf. mit der Steuerung (42) verbunden. Letztere beinhaltet die Software der Autonomieeinrichtung (40). In einer nicht dargestellten Ausführungsform kann das Gartengerät (1) von Hand bedient und geschoben oder gezogen werden, wobei ggf. auf einen Fahrantrieb (37) verzichtet werden kann. In diesem Fall ist eine geeignete Betätigungseinrichtung angebaut.

In den verschiedenen Ausführungsbeispielen hat die Schnitthöhenverstellung (13) bzw. deren Stelleinrichtung (14,15) eine Momentenstütze (10) für den Schneidantrieb (8). Diese nimmt die Reaktionskräfte und Reaktionsmomente des Schneidantriebs (8) auf und stützt sie am Chassis (2) ab. Hierdurch wird die Stelleinrichtung (14,15) entlastet.

Der Schneidantrieb (8) bzw. dessen Motor ist z.B. in einem Aufnahmegehäuse (9) angeordnet. Die Abtriebswelle ist im gezeigten Ausführungsbeispiel aufrecht oder vertikal angeordnet, wobei das Schneidwerkzeug (4) hängend am Schneidantrieb (8) gelagert und z.B. am unteren Ende der Motorwelle angeflanscht ist. Die Momentenstütze (10) kann in beliebig geeigneter Weise ausgebildet sein und ermöglicht die freie Bewegung in Richtung der Schnitthöhenverstellung (13). Sie ist hierfür z.B. als Geradführung des Schneidantriebs (8) mit Ausrichtung in Verstellrichtung, insbesondere in Richtung der Drehachse (6), gestaltet.

Die Geradführung weist z.B. zwei oder mehr parallele Führungselemente (11,12) mit Ausrichtung in Verstellrichtung auf. Dies können z.B. Führungsstangen (11) sein, die an verschiedenen Seiten des Antriebs (8) angeordnet sind und mit entsprechenden Führungs- oder Gleitbuchsen zusammenwirken. Eine solche Ausführung ist z.B. bei der manuellen Stelleinrichtung (14) von Figur 1 bis 8 vorgesehen. Bei der motorischen Stelleinrichtung (15) von Figur 9 bis 12 können die Geradführung bzw. die Führungselemente (12) durch zwei oder mehr längs der Drehachse (6) ausgerichtete Führungsleisten (12) gebildet werden, die z.B. als seitlich abstehende Rippen oder Nuten ausgebildet sind und in die entsprechende Führungsteile am Chassis (2) (nicht dargestellt) eingreifen oder angreifen.

Bei der manuellen Stelleinrichtung (14) von Figur 1 bis 8 ist das Stellmittel (18) längs der Verstellrichtung und z.B. längs der Drehachse (6) ausgerichtet und ist z.B. als Hubstange gestaltet. Das Stellmittel (18) bzw. die Hubstange ist mit dem Antrieb (8) verbunden, wobei z.B. eine frei drehbare, ggf. zentrische Lagerverbindung zur Oberseite des Aufnahmegehäuses (9) vorhanden ist. Das Stellmittel (18) trägt am oberen freien Ende ein manuelles Betätigungselement (19), z.B. einen schwenkbaren Handgriff. Mit diesem kann die Hubstange (18) gehoben und gesenkt sowie in der bevorzugten Ausführungsform um ihre Längsachse gedreht werden. Durch die Hebe- und Senkbewegung wird der Schneidantrieb (8) und das Schneidwerkzeug (4) mitbewegt und die Schnitthöhe eingestellt. Mittels der Arretierung (20) kann die gewünschte Position fixiert werden, wobei über die besagte Drehbewegung die Arretierung (20) geöffnet und geschlossen werden kann.

Die Arretierung (20) ist in der Anordnung und funktional von der Momentenstütze (10) getrennt. Die Arretierung (20) kann kraftschlüssig und/oder formschlüssig sein. Sie kann z.B. eine Klemmeinrichtung mit der Möglichkeit zu einer stufenlosen Höhenverstellung aufweisen. In der gezeigten Ausführungsform ist die Arretierung (20) als Rasteinrichtung (21) ausgebildet, welche zusammenwirkende Rastelemente (22,23) aufweist. Dabei ist eine stufenweise Höhenverstellung gegeben.

Das Chassis (2) weist ein Stellgehäuse (16) auf, welches z.B. topfförmig gestaltet und nach unten offen ist. In dem Stellgehäuse (16) bewegt sich der Schneidantrieb (8). Das Stellmittel (18) ist am oberen Gehäusebereich mittels einer Gleitlagerung axial beweglich und drehbar gelagert.

Die Rasteinrichtung (21) weist formschlüssig ineinander greifende Rastelemente (22,23) auf. Die Rastelemente (22) werden z.B. durch mehrere in Axialrichtung übereinander angeordnete Vertiefungen am Mantel des Stellmittels (18) gebildet, die z.B. als tangentiale Nuten ausgestaltet sind. Die Vertiefungen können stellenweise am Umfang angeordnet sein. Das stationäre und am Stellgehäuse (16) gelagerte Rastelement (23) ist als Rastfeder ausgebildet.

Bei dieser Ausführungsform hat die Hubstange (18) eine im wesentlichen zylindrische Form mit einem kreisrunden Querschnitt, der alternativ auch oval oder prismatisch sein kann. Die Querschnittsform kann insbesondere im wesentlichen rotationssymmetrisch sein. Die mantelseitigen Tangentialnuten sind an gegenüberliegenden Seiten angeordnet und haben einen ebenen Nutenboden. In die Nuten greifen zur Arretierung jeweils Federarme (24) der Rastfeder (23) ein.

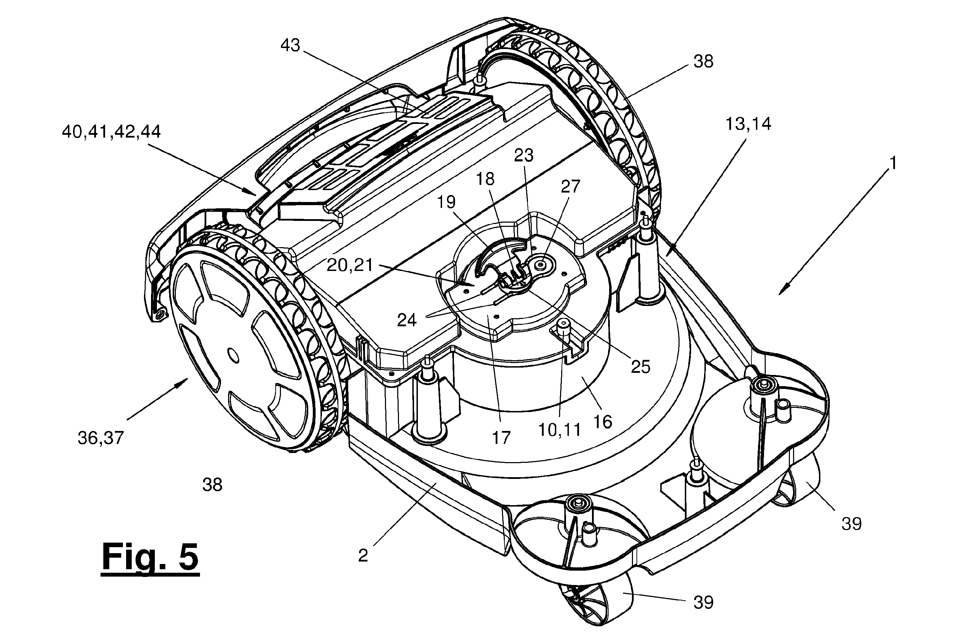

Wie insbesondere Figur 5 verdeutlicht, ist die Rastfeder (23) als gebogene Federklammer ausgebildet und ist am Gehäuse (16) geführt und abgestützt. Hierfür kann auf der Gehäuseoberseite ein Sockel (17) mit einem abnehmbaren Deckel vorhanden sein, in dem ein Aufnahmeraum (26) und auch eine Führung (27) für das Rastelement (23) gebildet ist. Hierfür kann der Sockel (17) bzw. dessen Deckel Rippen und Stege aufweisen, die eine seitliche Beweglichkeit der Federarme (24) zulassen. Die beiden Federarme der im wesentlichen U-förmigen Federklammer greifen in Rastposition beidseits in Nuten (22) der Hubstange (18) und fixieren diese in der Höhe.

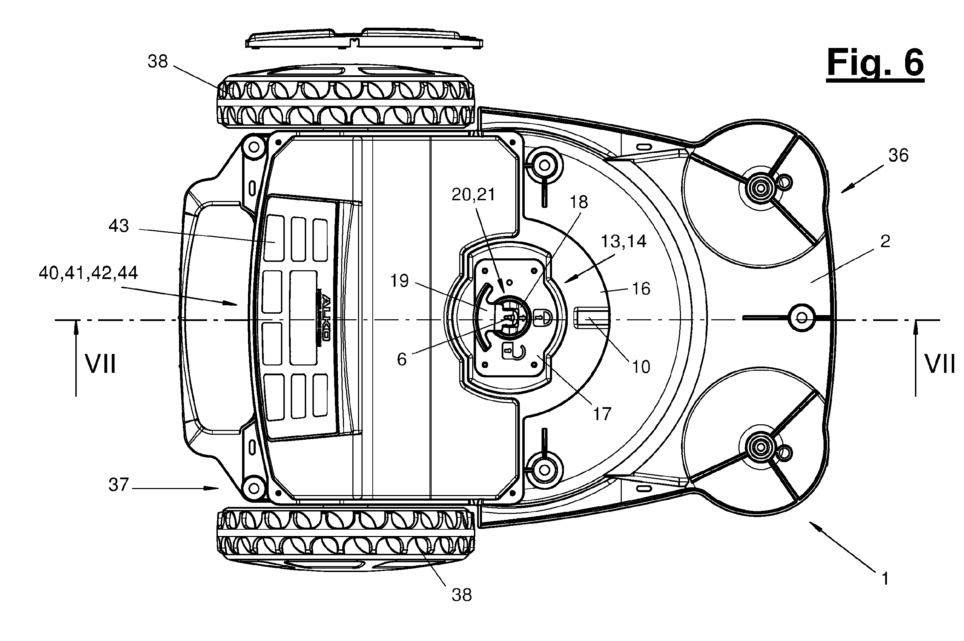

Die Arretierung (20) kann durch die erwähnte Drehbewegung aktiviert und deaktiviert werden. Wenn die Hubstange (18) um ihre Längsachse gedreht wird, wird durch die nutenfreien und im Durchmesser größeren Mantelbereiche die Federklammer (23) gespreizt. Die formschlüssige Verbindung in Axialrichtung wird aufgehoben, sodass die freigegebene Hubstange (18) gehoben und gesenkt werden kann. Um diesen Effekt zu erleichtern und den Reibungswiderstand zu mindern, können die Federarme (24) im Stellmittelbereich eine gerundete Ausbauchung (25) aufweisen. Gemäß Figur 6 zeigen Symbole an der von oben sichtbaren Seite des Sockels (17) die Freigabedrehstellung an.

Bei der motorischen Stelleinrichtung (15) von Figur 9 bis 12 ist das Stellmittel (30) mehrteilig ausgebildet und weist eine Kulissenführung (31) auf. Das Stellmittel (30) besteht hierzu aus zwei oder mehr miteinander im Eingriff stehenden Kulissenteilen (32,33), die rohrförmig ausgebildet sind und den Schneidantrieb (8) sowie ggf. die Drehachse (6) umgeben. Die Kulissenteile (32,33) weisen an der Kontaktstelle eine schraubenförmige Gleitbahn (34) auf. Die Kulissenteile (32,33) können an den einander zugewandten Endbereichen eine stufen- oder zahnförmige Gestaltung haben, wobei die Gleitbahn (34) unterbrochen und in Abschnitte unterteilt ist. An der Gleitbahn (34) liegen die Kulissenteile (32,33) aufeinander.

Am oberen Kulissenteil (32) ist der Antrieb (8) gehalten. Das Kulissenteil (32) kann zugleich das Aufnahmegehäuse (9) bilden und kann auch die Führungsleiste (12) für die Momentenstütze oder Geradführung an zwei oder mehr verteilten Stellen haben. Es ist dadurch in Stellrichtung gerade geführt und kann sich nicht drehen.

Das untere Kulissenteil (33) ist um die Stell- oder Drehachse (6) drehbar am Chassis (2) gelagert und steht mit dem Stellantrieb (28) in Verbindung, z.B. über das dargestellte Getriebe (35). Das Getriebe (35) kann z.B. einen Zahnkranz an der zylindrischen Außenseite des Kulissenteils (33) aufweisen, das mit einem Ritzel oder Schneckenrad am tangential angreifenden Stellantrieb (28) kämmt. Die Arretierung (20) kann bei dieser Ausführungsform durch eine Bremse oder ggf. auch durch Selbsthemmung des Getriebes bzw. des Stellantriebs (29) gebildet werden.

Eine Drehung des unteren Kulissenteils (33) wird über die Kulissenführung (31) und die schraubenförmige Gleitbahn (34) in eine Hebe- oder Senkbewegung des oberen Kulissenteils (32) und des Antriebs (8) bzw. des Schneidwerkzeugs (4) umgesetzt.

Aus Gewichts- und Reibungsgründen ist es günstig, die Stelleinrichtung (14,15), insbesondere das Stellmittel (18,30), aus Kunststoff auszubilden. Das Gehäuse (16) und ggf. die Momentenstütze (10) können ebenfalls aus Kunststoff bestehen.

In Abwandlung der gezeigten Ausführungsform von Figur 9 bis 12 kann statt des Stellantriebs (29) auch ein manuelles Bedienelement, z.B. ein Drehgriff oder dgl. angebracht sein. In weiterer Abwandlung kann ein Stellmittel auch als Spindeltrieb zum Heben und Senken des Antriebs (8) bzw. des Schneidwerkzeugs (4) ausgeführt sein. Auch Schwenkverstellungen mit Schwenkarmen in Form von Parallelogrammlenkern oder dgl. mit einem entsprechenden manuellen oder motorischen Antriebsmittel sind möglich.

Ferner können in Abwandlung die Merkmale der verschiedenen Ausführungsbeispiele beliebig untereinander kombiniert oder vertauscht werden.

### BEZUGSZEICHENLISTE

- 1: Gartengerät, Rasenmäher, Mähroboter
- 2: Chassis, Gehäuse
- 3: Haube, Deckel
- 4: Schneidwerkzeug
- 5: Messerbalken
- 6: Drehachse
- 7: Schneidraum
- 8: Antrieb für Schneidwerkzeug, Schneidantrieb, Motor
- 9: Aufnahmegehäuse, Topf
- 10: Momentenstütze, Geradführung
- 11: Führungselement, Führungsstange
- 12: Führungselement, Führungsleiste, Rippe
- 13: Schnitthöhenverstellung
- 14: Stelleinrichtung manuell
- 15: Stelleinrichtung motorisch
- 16: Stellgehäuse
- 17: Sockel
- 18: Stellmittel, Hubstange
- 19: Betätigungselement, Handgriff
- 20: Arretierung
- 21: Rasteinrichtung
- 22: Rastelement, Nut
- 23: Rastelement, Rastfeder
- 24: Federarm
- 25: Ausbauchung
- 26: Aufnahmeraum
- 27: Führung für Rastelement
- 28: Stellantrieb
- 29: Motor
- 30: Stellmittel
- 31: Kulissenführung
- 32: Kulissenteil oben
- 33: Kulissenteil unten
- 34: Gleitbahn schraubenförmig
- 35: Getriebe

- 36: Fahrwerk
- 37: Fahrantrieb
- 38: Rad angetrieben
- 39: Rad schwenkbar
- 40: Autonomieeinrichtung
- 41: Lenkeinrichtung
- 42: Steuerung
- 43: Bedieneinrichtung
- 44: Energieversorgung

## Patentansprüche

1. Gartengerät, insbesondere Rasenmäher, mit einem Chassis (2), einem Fahrwerk (36), einem Schneidwerkzeug (4) mit einem Antrieb (8) und einer Schnitthöhenverstellung (13), welche die Höhe des Schneidwerkzeugs (4) und seines Antriebs (8) relativ zum Chassis (2) verstellt, wobei die Schnitthöhenverstellung (13) eine manuelle oder motorische Stelleinrichtung (14,15) und eine Momentenstütze (10) für den Antrieb (8) aufweist.

2. Gartengerät nach Anspruch 1, **dadurch gekennzeichnet, dass** eine Momentenstütze (10) als Geradführung des Antriebs (8), vorzugsweise mit zwei oder mehr parallelen Führungselementen (11,12) mit Ausrichtung in Verstellrichtung, ausgebildet ist.

3. Gartengerät nach Anspruch 1 oder 2, **dadurch gekennzeichnet, dass** das Schneidwerkzeug (4) eine aufrechte Drehachse (6) aufweist, wobei die Schnitthöhenverstellung (13) eine gerade Verstellung entlang der Drehachse (6) bewirkt und eine Geradführung des Antriebs (8) parallel zur Drehachse (6) ausgerichtet ist.

4. Gartengerät nach Anspruch 1, 2 oder 3, **dadurch gekennzeichnet, dass** das Schneidwerkzeug (4) am Antrieb (8) hängend gelagert ist, wobei der Antrieb (8) einen Elektromotor und ein Aufnahmegehäuse (9) aufweist.

5. Gartengerät nach einem der vorhergehenden Ansprüche, **dadurch gekennzeichnet, dass** eine manuelle Stelleinrichtung (14) ein mit dem Antrieb (8) verbundenes Stellmittel (18) mit einem Betätigungselement (19) und eine Arretierung (20) zu seiner Höhenfixierung aufweist.

6. Gartengerät nach einem der vorhergehenden Ansprüche, **dadurch gekennzeichnet, dass** ein Stellmittel (18) einer Stelleinrichtung (14) stufenweise verstellbar und arretierbar ist.

7. Gartengerät nach einem der vorhergehenden Ansprüche, **dadurch gekennzeichnet, dass** ein Stellmittel (18) einer Stelleinrichtung (14) längs der Drehachse (6) ausgerichtet und in einem gerätefesten Gehäuse (16) der Stelleinrichtung (14) axial beweglich und drehbar geführt ist.

8. Gartengerät nach einem der vorhergehenden Ansprüche, **dadurch gekennzeichnet, dass** ein Stellmittel (18) einer Stelleinrichtung (14) als drehbar am Antrieb (8) gelagerte Hubstange mit einem vorzugsweise zylindrischen oder ovalen Querschnitt und mit einem Griff ausgebildet ist.

9. Gartengerät nach einem der vorhergehenden Ansprüche, **dadurch gekennzeichnet, dass** eine Arretierung (20) eines Stellmittels (18) einer Stelleinrichtung (14) als Rasteinrichtung (21) ausgebildet ist.

10. Gartengerät nach einem der vorhergehenden Ansprüche, **dadurch gekennzeichnet, dass** eine Rasteinrichtung (21) mehrere zusammenwirkende Rastelemente (22,23) am Stellmittel (18) und an einem gerätefesten Gehäuse (16) aufweist.

11. Gartengerät nach einem der vorhergehenden Ansprüche, **dadurch gekennzeichnet, dass** eine Rasteinrichtung (21) durch Drehung des Stellmittels (18) zwischen einer Rastposition und einer Freigabeposition verstellbar ist.

12. Gartengerät nach einem der vorhergehenden Ansprüche, **dadurch gekennzeichnet, dass** Rastelemente (22) als stellenweise Vertiefungen, insbesondere als tangentiale Nuten, am Mantel eines Stellmittels (18) ausgebildet sind.

13. Gartengerät nach einem der vorhergehenden Ansprüche, **dadurch gekennzeichnet, dass** ein stationäres Rastelement (23) als Rastfeder ausgebildet ist.

14. Gartengerät nach einem der vorhergehenden Ansprüche, **dadurch gekennzeichnet, dass** eine Rastfeder als gebogene Federklammer ausgebildet und an einem gerätefesten Gehäuse (16) geführt und abgestützt ist, wobei die Rastfeder Federarme (24) mit einer Ausbauchung (25) im Bereich des Stellmittels (18) aufweist.

15. Gartengerät nach einem der Ansprüche 1 bis 4, **dadurch gekennzeichnet, dass** eine motorische Stelleinrichtung (15) ein mehrteiliges längenveränderliches Stellmittel (30) mit einer Kulissenführung (31) aufweist.
